Europäisches Patentamt

European Patent Office

Office européen des brevets

(11) Publication number: **0 392 184**

**A2**

# EUROPEAN PATENT APPLICATION

(21) Application number: **90104071.7**

(51) Int. Cl.⁵: **G06F 12/08**

(22) Date of filing: **02.03.90**

(30) Priority: **12.04.89 US 337000**

(43) Date of publication of application:
**17.10.90 Bulletin 90/42**

(84) Designated Contracting States:
**DE FR GB**

(71) Applicant: **International Business Machines Corporation**
**Old Orchard Road**
**Armonk, N.Y. 10504(US)**

(72) Inventor: **Heidelberger, Philip**
**24 Lakeview Avenue West**
**Peekskill, N.Y. 10566(US)**
Inventor: **McAuliffe, Kevin Patrick**
**3417 Strang Boulevard**
**Yorktown Heights, N.Y. 10598(US)**
Inventor: **Rathi, Bharat Deep**
**167C Route 8, Lakeview Drive**
**Mahopac, N.Y. 10541(US)**
Inventor: **Tantawi, Asser Nasreldin**
**31 Maple Hill Drive**
**Mahopac, N.Y. 10541(US)**

(74) Representative: **Rudolph, Wolfgang, Dipl.-Ing.**
**IBM Deutschland GmbH Schönaicher**
**Strasse 220**
**D-7030 Böblingen(DE)**

(54) Hierarchical memory organization.

(57) A parallel processor computer system having a large shared memory (Mps) is provided with shared memory caches (Cm) associated with the various modules of the memory system selectively connectable to each other and to the processors (P) over one or more crossbar or multi-stage interconnection networks. The memory caches (Cm) coexist with processor caches (Cp), located adjacent to each processor (P). The processor caches primarily store private data, but may also store shared-read-only data. The control logic for the shared memory parallel processor system utilizes the shared memory caches to cache shared data and improve the memory performance by reducing the memory access time for shared memory (511, 610). It also reduces the latency of a shared memory reference that has to be routed via the multiple processor multi-stage interconnection network and increases its own throughput by effectively reducing the memory access time and avoids the need for cache coherence among the shared memory caches. Access to the shared memory caches is not restricted to one processor, or cluster of processors, but is distributed across the memory modules of the system and is accessible by all processors. Further, the shared memory caching scheme scales up with the number of processors in the system with minimum changes to addressing and other control mechanisms.

FIG.3

# HIERARCHICAL MEMORY ORGANIZATION

The present invention relates to hierarchical memory systems according to the preamble of claim 1 and to a method as set forth in the preamble of claim 11.

The effective memory access time of a computer system has a substantial effect on the overall performance of the system. Therefore many techniques have been suggested to minimize this time, for example interleaving, multi-word access per cycle, caching, etc. Among these techniques caching has long been a very popular technique for this purpose.

In conventional uniprocessor or multi-processor system organizations caches have been placed in between the processor and the memory, and have been physically placed closer to the processor. This has been done to minimize the cache access time as much as possible, so that the effective memory access time could be minimized as much as possible.

Such caches usually have a much shorter access time than the next level of memory and are conventionally provided with at least limited associative access. However, cache memory is much more expensive than main store and various cache management policies are used to maintain the most frequently accessed data and instructions in cache.

In conventional multiple processor systems each processor is assigned its own cache. These processor-cache units are then connected via some interconnection facility (usually one or more shared busses) to the shared memory and can generally cache any memory location. Since each processor has its own cache, some mechanism for cache coherence needs to be supported in order to ensure that all the processors have a consistent image of the shared memory.

In order to make conventional multiple processor caches effective, the cache coherence mechanism has to be fast and therefore needs to be implemented in hardware. Cache coherence mechanisms that have been used or proposed for such systems, either employ: a centralized cache coherence manager and/or some "watch-dog" logic that monitors the traffic from the caches to the shared memory. This later technique also requires the broadcasting of all the traffic to the shared memory to all the processors' "watch-dog" logic. Conventional multiple processor systems generally have used a dedicated, shared bus for this broadcast.

Such cache coherence mechanisms are suitable for systems that have a small number of processors (e.g. about 1 to 32 processors). But they are not feasible for systems that have a larger number of processors (e.g. 100s or 1000s of processors). The main reason for this is that the centralized cache coherence manager and the broadcast bus become a severe performance bottleneck as the number of processors in the system increases. Therefore, for shared memory systems with large numbers of processors, for example parallel processor systems, system architects have either decided to handle cache coherency via software [1] or have avoided using a cache [2] altogether.

Although these techniques solve the cache coherence problem, they do not reduce the shared memory's effective access time, as well as a cached system with hardware cache coherence. Therefore, for systems with a large number of processors, there is a need for a better shared memory caching method that does not have the problems of the above two methods and that can help improve the overall performance of the system.

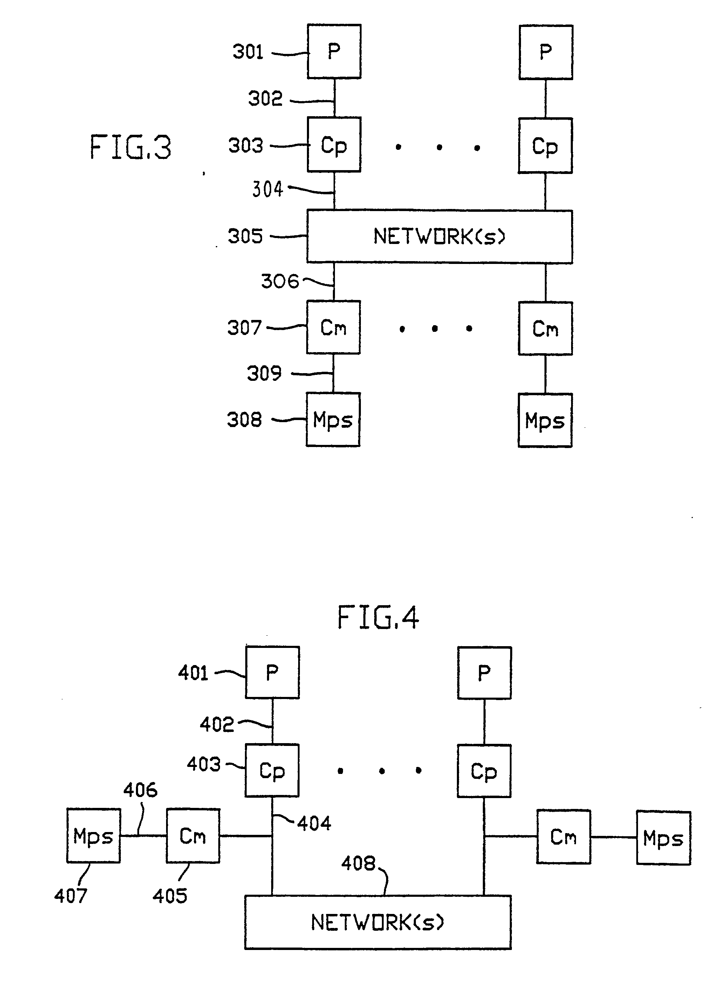

In shared memory parallel processor systems, a reduced shared memory access time can have a significant impact on the performance of the interconnection network and the overall system too. For example in the RP3 system (see Fig. 2) the overall system memory 205 is functionally spread across the memory modules assigned to each processor 201. In order for a processor 201 to access shared memory locations that are not in its memory module, it needs to send these references across the network 206. The time taken to satisfy this request is not only dependent on the memory access time of the shared memory reference, but also on the latency of the network 206. The latency of the network 206 is dependent on many parameters, among which are blocking in the network, queuing in the network and the busy time of its output ports. These network parameters in turn are affected by the effective memory access time. Therefore, in such parallel systems, reducing the effective access time of the shared memory 205 can significantly improve the overall system performance.

Although each processor 201 in the RP3 system (Fig. 2) has a cache 203, this cache is mainly used to cache instructions and non-shared (i.e. private) data. Shared data can be cached in this cache 203, provided the software has obtained mutually exclusive use of this data via locking or some other arrangement in the memory 205 as will be well understood by those skilled in the art. Obtaining this mutual exclusion itself adds significant overhead to shared data references and therefore can degrade the performance of the system.

Even though there is a way to cache shared data (as mentioned above) in RP3 like processor caches, it is not desirable to cache all types of shared data. For example, a system/application may not want to cache shared locks, indices, pointers, etc. In order to improve the time taken to reference these types of shared data, RP3 like systems provide Fetch & Operation (F&O) type of instructions (e.g. Fetch & Add) and a combining network [1]. But again one of the parameters that affects the performance of F&O type operations and combining networks is the shared memory's effective memory reference time. Therefore improving the access time of the shared memory will also help here.

The following example gives an idea of how significantly shared memory access time can affect system performance. In the RP3 system [1] shared data can reside in the memory module 205 that is attached to the processor (i.e. local memory) or in any other memory module (see Fig. 2). In the latter case the memory reference has to be routed via the network 206. Assuming that it takes one time unit to reference data from the cache 203, then the ratio of access times for the above mentioned two types of memory references is:

$$
\begin{array}{ccc}
\text{Cache} & : & \text{Local Memory} : \\
1 & & 10
\end{array}
$$

$$
\begin{array}{c}
\text{Memory Access across the network :} \\
\text{'16}
\end{array}
$$

The local memory access time components are:

$$
\begin{array}{cccc}
\text{Local Memory} & & \text{Cache miss} & \text{Memory} \\
\text{access time} & = & \text{overhead} + & \text{access time} \\
10 & & 1 & + \quad 9
\end{array}
$$

The access time components for the shared memory reference across the network 206 (assuming no network contention) are:

$$
\begin{array}{ccccc}
\text{Network Memory} & & \text{Cache miss} + & \text{Network} + & \text{Memory} \\
\text{access time} & = & \text{overhead} + & \text{latency} + & \text{access time} \\
16 & = & 1 & + \quad 6 & + \quad 9
\end{array}
$$

It is apparent that in the local shared memory access case the overhead contributed by the memory access time is 90% of the effective memory reference time. In the shared memory reference across the network case, this overhead is 56% of the effective memory reference time.

It may further be seen that improving the access time of the shared memory is very important for multiple processor systems. Since conventional methods for shared memory caching, incorporating hardware coherence mechanisms, do not scale (i.e. are feasible) as the number of processors in the system grow, new methods to cache shared data need to be developed.

The Shared Memory Cache proposed herein meets these needs very well and therefore is very attractive for systems with a large number of processors (e.g. parallel processor systems).

The caching scheme (organization) of the present invention is compared/contrasted with other caching schemes that have been previously proposed for improving the effective access time of shared memories. In order to effectively do this comparison, only known cache architectures that can support all of the following features have been considered to be relevant in view of the vast amount of published literature in the field of cache architectures etc.

1. The architecture must allow both Processor and Memory caches to coexist in the memory hierarchy.

2. Both the Processor and Memory caches are physically distributed in the system.

3. The architectures do not require any hardware, cache coherence mechanisms for the caches for

4

the purpose of maintaining proper data coherence.

4. The caching scheme should be readily able to scale with the size of the system. That is the architecture should be capable of supporting the same caching scheme as the number of processors increase in the system without significant revision.

5. The caching scheme should be feasible for large systems, for example, parallel processor systems with hundreds or even thousands of processors.

It is believed that the above are necessary features for any large multiple processor system from both the performance and cost point of view, these were set as minimum standards in designing the present system.

References [1] and [6] co-authored by one of the present inventors generally describe the attributes of an experimental high speed multi-processor computing system having a large shared memory. The first, is tutorial in nature, and describes a system in which the present invention has particular utility. The second article broadly describes a memory element for such a system and generally describes certain cache management organizations suitable for use in such large shared memories. Both of these articles provide valuable background information for the present invention.

In high-end computing systems, for example the S/370, constituting a dual cache hierarchy have been proposed and used. In such systems, an L1 cache is attached to each processor and L2 cache is attached to several L1 caches. It should be noted that each processor has exclusive access to its own L1 cache. Similarly an L2 cache exclusively supports the L1 caches attached to it. It is possible for several such processor-L1-L2 cache subsystems to exist within a system environment.

In such a processor-L1-L2 cache system, the L2 cache size is generally larger than the cumulative size of the L1 caches. Furthermore, the L2 cache holds information that is a super set of any L1 cache attached to it. In fact the L2 information is generally a super set of the information held by all the L1 caches attached to it.

There is a fundamental difference between the processor and memory caches taught by the present invention and the L1-L2 cache scheme. This difference is that in the present invention the information held by the memory caches is not a super set of the processor cache information. For example, private data will be stored in the processor caches only, and not in the memory caches. In the L1-L2 cache scheme, this private data would be stored in both the L1 and L2 caches.

Further in the present invention the size of the memory cache need not depend on the size of the processor cache. That is unlike the L2 cache, the memory cache does not have to be larger than a processor cache, or larger than the cumulative size of all the processor caches. Also, shared read-only data, of a memory cache, can reside in several processor caches. Furthermore, shared read-only data from several memory caches, can reside in a processor cache. That is unlike the L1-L2 caches, there is no exclusive relationship between the processor and memory caches.

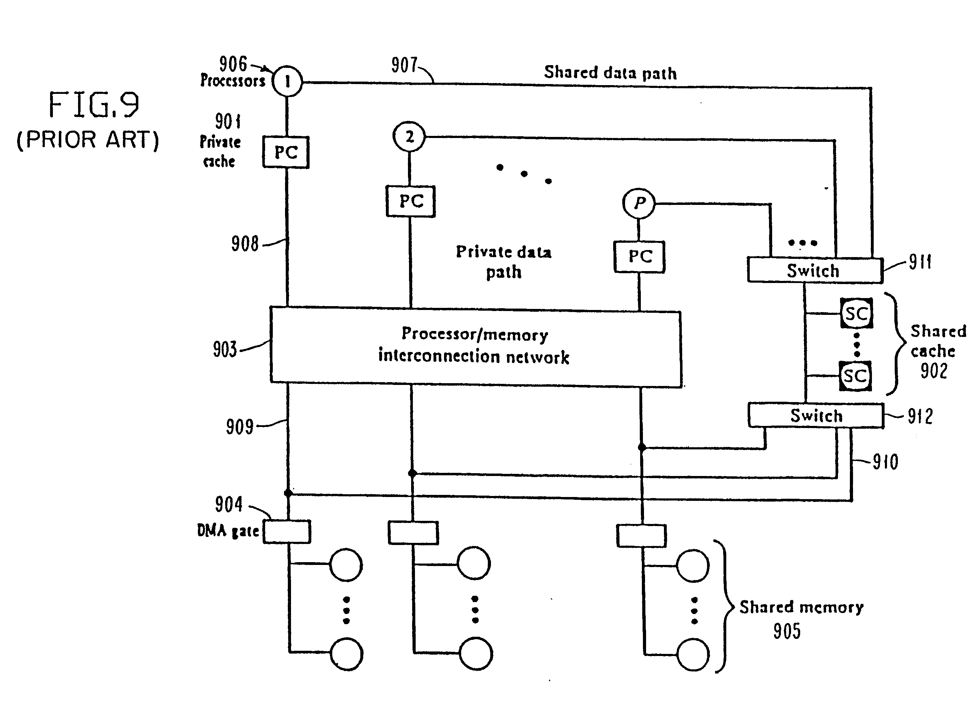

Only one other cache organization is known to the inventors in addition to the one proposed by the present disclosure, that satisfies all of the above requirements. This other cache organization has been proposed by Hwang and Briggs as described in reference [3] and shown in Fig. 9.

The cache organization of the present invention, referring briefly to Fig. 4, has the following advantages over the Hwang and Briggs organization. It does not need three separate networks 408 to interconnect the memory caches 405 to the processor 401 and the memory modules 407. According to the teachings of the present invention the processors 401 would be interconnected to the memory caches 405 and the memory modules 407 via the same network 408. As contrasted to the present invention the Hwang and Briggs organization uses the three separate networks 903, 911 and 912. Network 903 is used to connect the processors 906 to the memory modules 905. Network 911 connects the processors 906 to the shared memory caches 902 and uses network 912 to connect the memory caches 902 to the memory modules 905. As will be apparent the cache organization of the present invention is considerably more cost effective than that disclosed in the Hwang and Briggs publication.

From a packaging point of view also, the cache organization of the present invention is a more effective and efficient organization, because it does not require the extra networks 911 and 912 needed by the organization as shown in Fig. 9. Further, the memory caches 405 can be packaged with the memory modules 407 that they are attached to, thus leading to significant manufacturing cost reductions.

The cache organization of the present invention is also inherently a higher performing organization than the one shown in Fig. 9. This is because, in the case of a memory cache miss, the memory reference has to be directed to the appropriate memory 905 via a network 912 and bus 910. In the organization of the present invention, the memory cache 405 is attached to its memory modules 407 directly over the very short bus 406. Generally the latency of the network and a bus will be considerably higher than that of a bus alone.

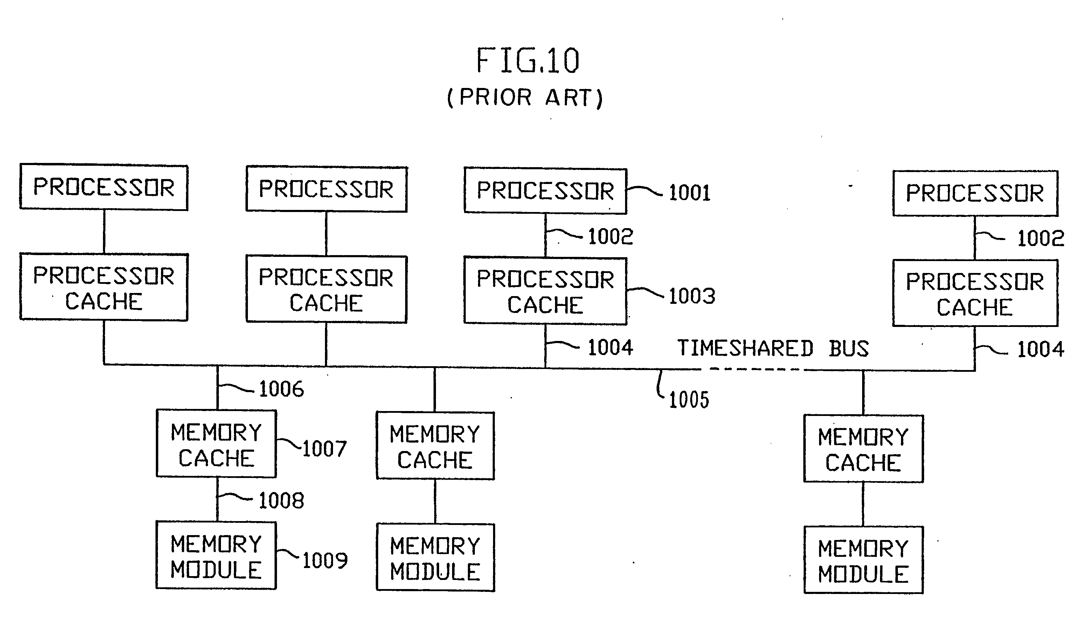

The Carrick-on-Shannon architecture proposed by Linn and Linn [5] conceptualizes the use of a separate processor 1003 and memory caches 1007 as shown in the functional block diagram of Fig. 10.

A major difference between the present architecture and that of the Linn-Linn paper is that it (Linn-Linn paper) proposes a processor-memory cache scheme, that is based on the use of a shared bus 1005 to interconnect the several processors and memories of the system; while the herein disclosed memory architecture uses an interconnection network (e.g. a crossbar or MIN type network) to interconnect the several processors and memories of the system. This distinction is extremely important, because it determines the scalability of the parallel processor system. In practice, bus based schemes are limited to interconnect only a small number of processors (e.g. less than 65 processors). Since disclosed system is based on an interconnection network, it is scalable to connect a significantly larger number of processors (e.g. hundreds). The Linn architecture also imposes a particular cache management policy to be used by the memory cache 1007, while the architecture of the present invention can utilize any cache management policy suitable to the system.

It should clearly be understood that it is not a simple matter to replace a bus with an interconnection network. This is because a bus based system architecture requires the use of broadcast to support Test-and-Set operations. The normal mode of operation of a bus is broadcast. But the normal mode of operation of an interconnection network is point-to-point communication. The interconnection network needs to be especially designed to support broadcast. Furthermore, the use of broadcast in interconnection networks, can have performance degradation and cost implications.

The architecture of the present invention does not require broadcast to be supported by the interconnection network. The Test-and-Set operation, used herein is atomically executed at the memory module (memory cache and memory logic) and the results are communicated directly to the processor requesting this operation. Thus, the results or negative acknowledgements are not broadcast to all the processors in the system. These results are communicated using point-to-point communication.

The Linn-Linn architecture also imposes some restrictions on the Test-and-Set (Tset) operations, for their memory caching scheme. As stated in their paper, they allow "only one Tset operation to be in progress or enqueued at a memory module at any time. Any additional Tsets received would be negatively acknowledged". They also suggest that this scheme can be modified to "accept as many Tsets as desired, as long as the same semaphore is referenced. In this situation, only the first Tset is enqueued; all others on the same semaphore are simply acknowledged and discarded".

Restricting only one Tsets operation to be enqueued at the memory module at any one time is extremely limiting for a system with a large number of processors. In the present system no such restrictions are imposed. In fact, any number of Tset operations can be enqueued. In particular, it should be noted that no Tset operations are discarded or negatively acknowledged. Such operations may be enqueued. Each such enqueued Tset operation is atomically executed by the memory cache and memory logic and the results of this operation are returned to the appropriate processor.

Furthermore, the support of other types of synchronization operations is envisioned for example the Fetch&Add. These operations are also executed atomically at the memory module and the results of these operations are returned to the appropriate processor.

The herein disclosed architecture also allows local memory modules to be attached to processors of the system. Examples of such memory modules are shown in Figs. 5 and 6. Similarly, local memory modules can also be configured for the examples shown in Figs. 7 and 8. If such a local memory is used, the present architecture would take advantage of it by storing private data and instructions in this memory. Since private data and instructions are cached by the processor cache only, system performance can be increased by avoiding accessing them from the memory across the interconnection network.

The architecture proposed by the Linn-Linn paper requires that a uniform address space be used. That is memory is not partitioned into local and shared memory.

It should be noted of course that the present architecture can also be used for a system that supports only uniformly addressed memory but this is not necessary.

Finally, the architecture proposed by Linn-Linn requires that a processor can have only one outstanding request to memory. That is the processor has to wait, to receive a response from the memory, for every memory request. It cannot execute any other request during this waiting period. This can severely limit the performance of large multi-processor systems.

The present architecture does not impose any such restrictions. Thus, the number of outstanding requests at a processor are only limited by: 1) the design of the processor: and 2) the nature of the computation being executed at the processor.

It should also be noted that the architecture of the present invention is also significantly different from cache proposals such as the one described in U.S. Patent 4,622,631 of Frank et al [4], in that the present architecture does not require any hardware cache coherence support. In contrast, the cache architecture disclosed in U.S. Patent 4,622,631 is primarily directed to a hardware cache coherence scheme. It also assumes that only a processor cache is used and that this cache stores both private and shared data. It will be apparent from the following description and from the high level functional block diagram of Fig. 4, that in the present architecture, each processor has its own dedicated cache 403 Cp, as well as a memory cache 405 Cm directly associated with each memory module.

It is the primary object of the present invention to provide an improved hierarchical memory system and to a method for managing shared data stored therein, which system is uniquely suited for use with a large multi-processor computing system, that automatically maintains data coherence for cached data, and wherein "private and shared read-only" data and shared data is cached in two separate caches.

It is another object of the invention to provide such a system wherein the two caches are processor caches and a memory caches where the memory caches are physically distributed throughout the multi-processor memory system, and which is easily scalable to large numbers of processors and does not require a special hardware means for maintaining data coherence.

The solution of the objects for the system and the method are described in the characterizing parts of claim 1 and claim 15 respectively.

The objects of the present invention are accomplished in general by a large distributed memory system having a plurality of separate, individually accessible memory modules wherein a separate memory cache is functionally associated with each memory module, said cache being functionally located between the memory module and any processor requiring access thereto.

According to a further aspect of the invention, the shared memory is particularly suited for use with a large multi-processor system wherein the memory caches may be shared between various processors and wherein each processor is provided with its own processor cache for storing data, private to that processor or shared on a read-only basis by all processors.

According to yet another aspect of the invention, each private processor cache is physically located adjacent to its respective processor and each shared memory cache is located physically adjacent to its own memory module or group of memory modules and wherein the individual processors and the individual memory modules are directly connectable to each other over a multistage interconnection network or a crossbar network.

The herein described hierarchical memory system architecture and methodology for use with shared memories in large, high speed multi-processor systems is designed to improve the effective access time for shared memory operations. The disclosed memory cache and processor cache organization is more effective than other known schemes which had been proposed for this purpose in the past, both from a cost and performance view. Further, the herein described systems does not require any hardware cache coherence support. Therefore, unlike conventional shared memory caching schemes and scheme discussed for the Carrick-on-Shannon architecture shown in Fig. 10, the present memory caching architecture and methodology can scale upwards as the number of processors in the system increases. The only modifications necessary would be to increase the size of the address field or identifiers so that information may be returned to the proper requesting processor as will be well understood.

A detailed description of how external input/output devices can be interfaced to the system is not specifically set forth since virtually any I/O attachment mechanism can be accommodated within the system framework. Examples include attachment of I/O to the network(s) or directly to some of the processors.

While the invention has been described with respect to several preferred embodiments of the overall hierarchical memory system architecture, the underlying feature of the invention is the use of individual memory caches located between the memory module or modules which they serve and the communication network interconnecting the memory subsystem with the processor. It will be apparent that many modifications in form and detail may be made by those skilled in the art without departing from the essential spirit and scope of the invention as set forth in the appended claims.

## REFERENCES

[1] Pfister, G. F. Brantley, W. C. George, D. A., Harvey, S. L. Kleinfelder, W. J. McAuliffe, K. P., Melton, E. A., Norton, V. A. and Weiss J. "The IBM Research Parallel Processor Prototype (RP3): Introduction and Architecture," Proc of 1985 International Conference on Parallel Processing, August 20-23, 1985. Pages 764-771.

[2] Crowther, W., et al, "The Butterfly Parallel Processor", Computer Architecture Technical Committee Newsletter, September/December 1985. Pages 18-45.

[3] Hwang Kai and Briggs, F. A., "Computer Architecture and Parallel Processing", McGraw-Hill Book Company, 1984.

[4] Frank, S. J. and Merritt, J. S., "Data Processing System Having a Data Coherence Solution", United States Patent No. 4,622,631, November 11, 1986.

[5] Linn, C. J. and Linn, J. L., "The Carrick-on-Shannon Architecture: A Two-level Cache-Coupled Multi-processor Architecture", Proceedings of the 18th Annual Hawaii International Conference on System Sciences, 1985.

[6] McAuliffe, K. P., Brantley, W. C., and Weiss, J., "The RP3 Processor/Memory Element," Proc. of the 1985 International Conference on Parallel Processing, August 20-23, 1985. Pages 782-789.

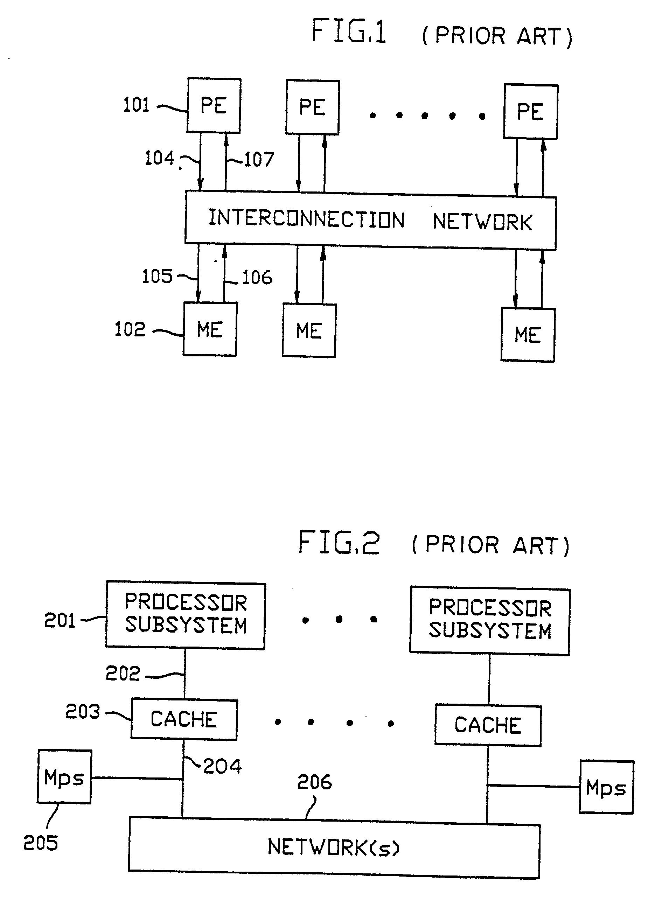

Fig. 1 comprises high level functional block diagram of a conventional parallel processor system.

Fig. 2 comprises a high level functional block diagram of the RP3 [1] parallel processor system organization.

Fig. 3 comprises a high level functional block diagram of a system organization incorporating the architectural principles of the present invention showing separate processor and memory caches.

Fig. 4 comprises a high level functional block diagram of a variant of the organization shown in Fig. 3 wherein separate processor and memory caches can be supported and are organized as in the RP3 system architecture as shown in Fig. 2.

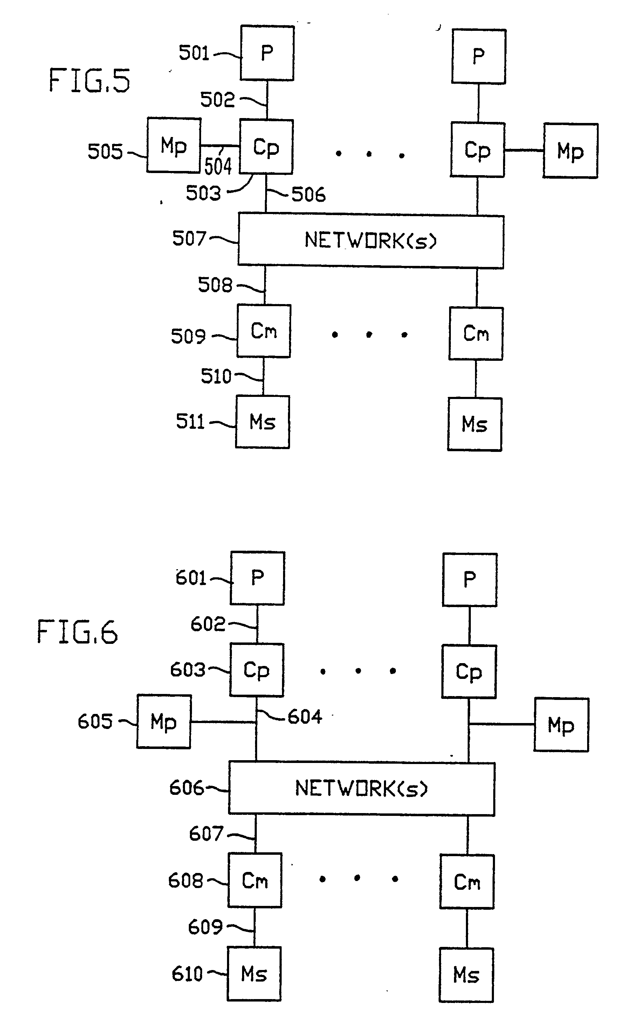

Fig. 5 comprises a high level functional block diagram of still another variant of the multi-processor system of Fig. 3 including processor and memory caches with separate, private and shared memories.

Fig. 6 comprises a high level functional block diagram of another multi-processor system configuration incorporating the teachings of the present invention showing processor and memory caches with separate, private and shared memories.

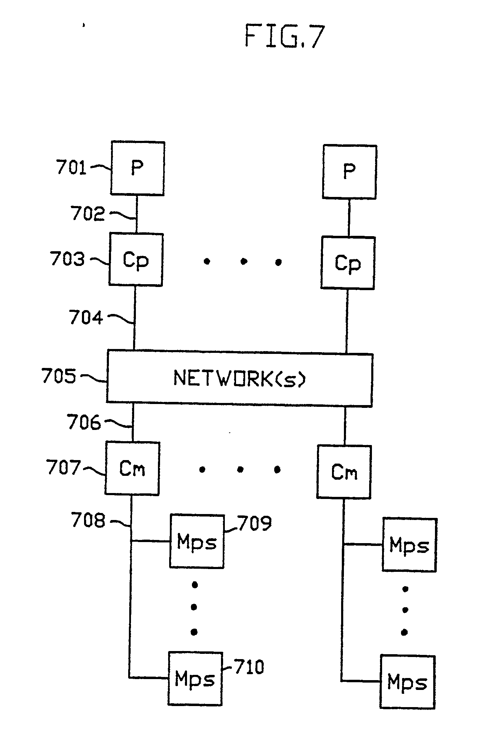

Fig. 7 comprises a high level functional block diagram of another multi-processor system configuration illustrating the present invention including multiple memory modules attached to each of several memory caches, said system also being provided with appropriate processor caches. While not shown in the figure, local memory (mp) can also be included as illustrated in Figs. 5 and 6.

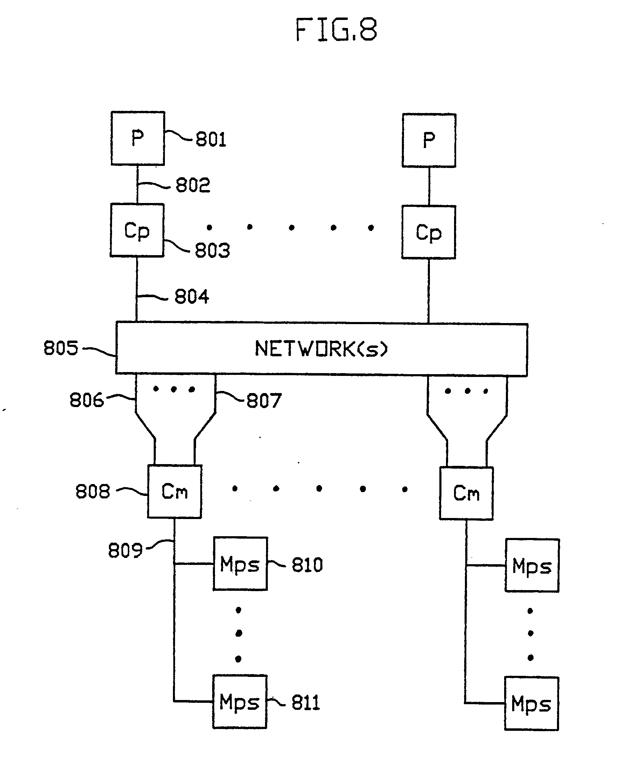

Fig. 8 comprises a high level functional block diagram of another multi-processor system configuration of the present invention illustrating a system and memory organization having multiple network output (memory) ports attached to separate memory caches. While not shown in this figure, local memory can also be included as illustrated in Figs. 5 and 6.

Fig. 9 (Prior Art) comprises a high level functional block diagram of the Hwang and Briggs architecture [3] interconnecting processor and memory caches over a complex interconnection network.

Fig. 10 (Prior Art) comprises a high level functional block diagram of the Carrick-on-Shannon system architecture's processor and memory cache organization.

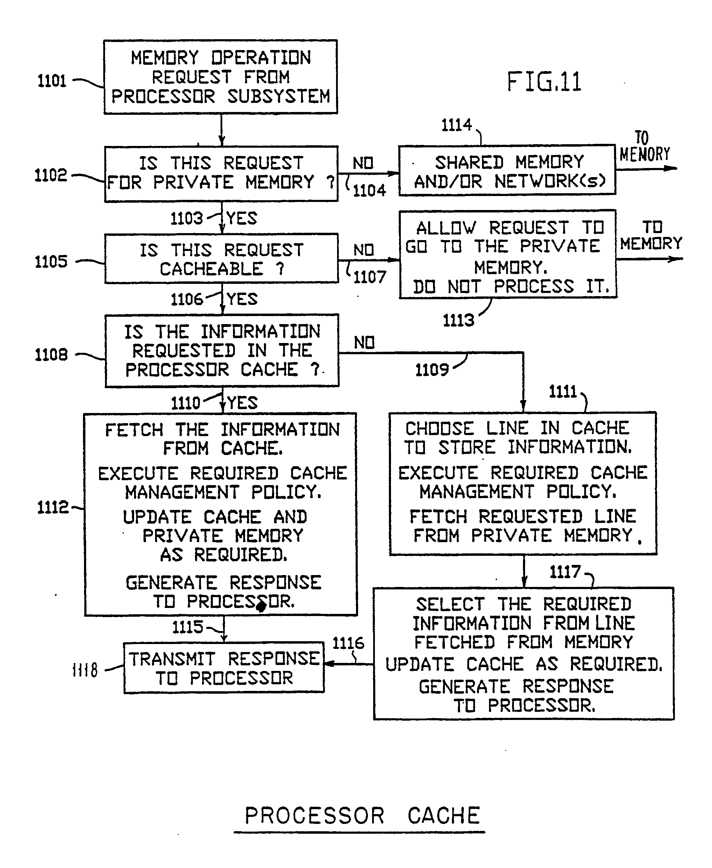

Fig. 11 comprises a flow chart describing the operation of the control logic of a processor cache resident in a multi-processor system organization incorporating the features of the present invention.

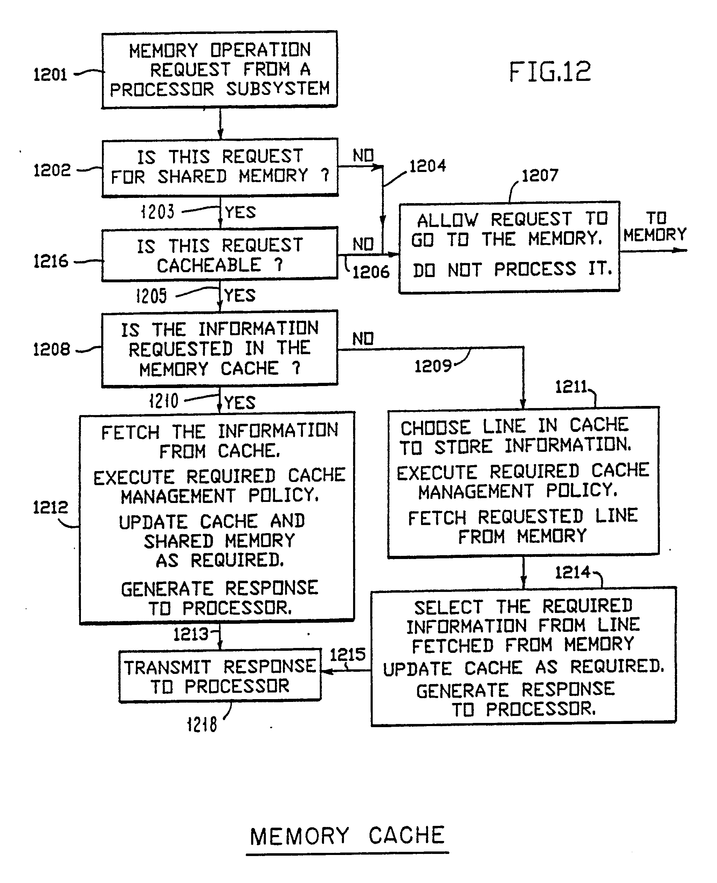

Fig. 12 comprises a flow chart describing the operation of the control logic of a memory cache resident in a multi-processor system incorporating the features of the present invention.

The herein described invention proposes that in shared memory type multiple processor systems, private data (i.e. non-shared data or shared read-only data) and shared data be cached in two separate caches. The private data cache should be organized closer to the processor, as done in conventional caching; while the shared memory cache should be organized closer to the memory. In the following description, the private data cache will be referred to as the Processor Cache and the shared data cache the Memory Cache. Further, each processor is assigned its own Processor Cache; while each shared memory bank or each network's memory port is assigned a Memory Cache. Fig. 3 shows the organization of a generalized multiple processor 301 system that supports both of these types of caches 303 and 307.

Fig. 3 is an example of an organization of a basic system that supports such a dual cache architecture. Some other examples are shown in Figs. 4 to 8. The organization shown in these figures can be interpreted as either a logical or physical organization of a system. The organization shown in Fig. 4 demonstrates the location of the Memory and Processor Caches 405 and 403 in an RP3[1] type of tightly coupled multi-processor system. The organization shown in Figs. 5 and 6 illustrates the location of these caches in a system that supports separate private memories 505 and 605 and shared memories 511 and 610. The organization shown in Fig. 7 shows that a Memory Cache 707 can be attached to more than one shared memory module 709 to 710; while Fig. 8 shows that multiple interconnection network ports 806 to 807 can be interfaced to a single Memory Cache 808.

Before proceeding with a detailed description of the present invention a number of salient points of the proposed cache organization are presented.

It should be noted that in the subsequent description all of the reference numbers are keyed to their respective figures so that the first digit, or pair of digits in the case of Figs. 11 & 12, appear in that particular figure, thus, cache 303 is in Fig. 3, cache 808 is in Fig. 8 and functional block 1111 is is Fig. 11, etc.

It will be noted that in the basic organization of Fig. 3, the processor caches 303 and the memory caches 307 are physically distributed across the system, thus each of the processor caches is adjacent to the processor which it serves and each of the memory caches is adjacent to the module which it serves. There is no need for any signaling mechanism such as a special shared bus for "watch-dog" logic between the different processor and memory caches of the system such as is required in some of the prior art references for maintaining cache coherency.

The memory caches 307 are placed physically and functionally between the shared memory module or section which they serve and the rest of the system, e.g., communication network and processors. If the system's memory modules 407 support both private and shared data as in the RP3 system and as designated as Mps in Figs. 4, 7 & 8 then each memory cache 405 is placed in front of these modules 407 and the rest of the system as shown in Fig. 4.

Referring to the memory architecture shown in Fig. 7. The memory caches 707 can be used to cache references to more than one memory module or bank of modules 709-710. However, each memory cache 707 is provided with exclusive access to its associated set of memory modules or banks 709-710.

Within the overall memory cache architecture of the present invention, there is no need for the system to support any hardware cache coherence schemes for either the processor cache or the memory cache. Cache coherence is not needed for the processor caches such as 703 in Fig. 7 because they cache private and shared read-only data and are accessible only to their associated processor, hence no other processor can change data resident therein out of sequence. It is also not needed for the proposed memory caches, e.g., 707 because each memory cache 707 is provided with exclusive access to its own memory modules 709-710. It is to be understood however, that this does not preclude using software coherence techniques such as locks, time stamps, etc., within each of the memory cache management controls for mutually exclusive access to shared data, so that this data can be cached in a processor cache 703.

It is also not necessary for the overall multiprocessor/memory system to support processor caches such as 703 in order to support the memory caches 707. In fact, in systems that do not support processor caches 703, the memory caches 707 can also be used to cache private data if needed by utilizing certain designated areas of an individual memory cache to a particular processor.

Referring briefly to Fig. 8, a memory cache 808 can be attached to one or more network ports, e.g., 806-807, which are attached to the memory modules or banks 810-811 containing shared memory data. Similarly, the memory caches 808 do not preclude the use of buffers at the output ports 806-807 of the network 805, to hold outstanding requests to the memory caches 808 and memory modules 810-811 attached to the respective ports 806-807 through the memory cache 808. Such buffering as is well known in the art can help reduce tree saturation (hot spots) in the network.

Returning now to the overall description, in order to demonstrate the performance improvement potential that such Memory Caches have, their use in an RP3 like system is depicted in Fig. 4. The RP3 example referenced in the previous section described the various shared memory access times. If it is assumed that Memory Caches 405 (as proposed here) are used in an RP3 like architecture and that their access time is equivalent to the RP3 cache (i.e. one time unit), then shared memory access times, for a cache hit are:

```
Local Memory:
shared info.       Proc. Cache        Mem. Cache
access time    =    overhead     +    access time
     2         =        1        +         1


Network Memory:
shared info.  Proc. Cache + Network + Mem. Cache


access time  =  overhead + latency + access time
     8       =     1     +    6    +      1
```

On the other hand, the shared memory access times for a cache miss are:

Local Memory shared information access time = 1 + 1 + 9 = 11

Network Memory shared information access time = 1 + 6 + 1 + 9 = 17

(The above numbers have been derived by adding the memory access time overhead, of 9 time units, to the cache hit numbers).

Although for the cache miss case it is seen that the effective shared memory access time is degraded by 6% to 10%, there is a substantial improvement of 50% to 80% for the cache hit case. In fact these results are very attractive because they indicate that the Memory Caches 405 will improve the effective shared memory access time, as long as the Memory Cache 405 hit probability is higher than 0.12.

The above example indicates that Memory Caches can be very effective even when their cache hit probability is very low. Therefore they are believed to be very attractive for multiple processor systems.

To facilitate an understanding of the operation of the preferred embodiment of the present invention, reference will be made to the operation and function of a basic multi-processor system as shown in Fig. 1.

Such a parallel processor system can be seen to contain three distinct elements: processor element (PE) 101, memory element (ME) 102 and an interconnection network 103. A parallel processor system consists of several processors and memory elements that are connected to each other via the interconnection network. One or more networks can be used for this interconnection. In order to communicate across this network, a PE 101 sends a message over line 104 to the network 103. The network routes this message to the required ME. The memory element 102 receives this message over line 105, processes it and sends a reply message over line 106 to the requesting network 103. The network then routes this message to the required PE. The PE receives this message over line 107 and processes it. It should be noted that the network can also be used to communicate between the PEs.

The details of the operation of the PE, ME and interconnection network are not relevant to the present invention and are consequently not discussed in detail. The following general description and reference to the many articles describing state-of-the-art multi-processor systems will allow those skilled in the art to pratice the invention.

Parallel processor systems can support caches at the processors. One example of such a system is the RP3[1]. The RP3 system organization is shown in Fig. 2. In the RP3 the cache 203 is managed by software, that is there is no hardware cache coherence scheme supported by the system. In the RP3 system, when the processor 201 generates a memory request, the memory request is transmitted via line 202 to the cache 203. If the memory request is cacheable and the cache memory contains the memory information requested, then the cache 203 accesses the requested information from its memory as required. The cache 203 then sends the required response back over line 202 to the processor 201. But, if the memory request is not cacheable, or the cache memory does not contain the required information, then the request is sent via line 204 to the memory module 205 locally attached to the processor or across the network(s) 206. The memory module that receives this request accesses this information and sends an appropriate response to the requesting processor. If the information was cacheable, then the cache 203 updates its memory contents and then sends the response to the processor 201 over line 202. If the information is not cacheable, then the cache 203 does not update its memory contents, but sends the response to the processor 201 over line 202.

According to the present invention the parallel processor system is provided with and supports caches at both the processors and memory elements. One example of such a system is shown in Fig. 3. In such a system the references to memory are either marked private and shared, or they are identified by the caches 303 and 307 by examining the address range in which they map. (It should be noted that the particular scheme used is. not important for the invention disclosed and described here). In such a system the processor cache 303 and the memory cache 307 do not require any hardware cache coherence support.

In the system shown in Fig. 3, when the processor 301 generates a memory request, the memory request is transmitted via line 302 to the processor cache 303. If the memory request is cacheable, it is a private or shared read-only memory reference and the processor cache's memory contains the memory information requested, then the processor cache 303 accesses the information as required. The processor cache 303 then sends the required response to the processor 301 via line 302. But, if the memory request is not cacheable, for example a shared read-write memory reference, or the processor cache's memory does not contain the required information, then the request is sent via line 304 to the memory module 308 across the network(s) 305. The network 305 routes the message to the network port 306 to which the required memory module is attached. The request is intercepted by the memory cache 307 which accesses the information as required.

The "cacheability" and "shareability" characteristics of a particular memory request would convention-

EP 0 392 184 A2

ally be carried in special fields as will be well understood by those skilled in the art. Whether the requested data is, in fact, valid and currently in the memory cache would of course be determined by a search in the particular memory cache's directory.

The memory cache 307 then sends the required response to the processor 301, via the network 305 and line 306. But, if the memory request is not cacheable, or if the information requested is not in the appropriate cache, then the request is sent via line 309 to the memory module 308. The memory module that receives this request accesses this information and sends an appropriate response back over line 309 to the requesting processor. If the information was cacheable, then the appropriate cache 307 or 303 updates its memory contents and then sends the response to the processor 301. It should be noted that if the request was routed via the network to the memory module, then the response from the memory module will also be generally routed via the network.

Other parallel processor organization examples supporting both processor and memory caches are shown in Figs. 4-8 as noted previously. The basic operating principle for the processor and memory caches in all these organizations is the same, as described above. The only difference in these organizations is the type of memory modules used and the location of these memory modules and the memory cache. In the discussion given below the differences in these organizations are highlighted.

In Fig. 4 the location of the memory cache 405 in an RP3[1] like parallel system organization is shown.

Fig. 2 shows a basic RP3 layout characterized by the shared main memory modules 205 being distributed across the whole system. As will be noted this same overall organization is shown in Fig. 4, it being noted that the cache blocks 203 are functionally equivalent to the processor caches (Cp) 403 of Fig. 4.

It will also be noted that this RP3-like system has one memory module 407 per processor and it is attached locally to the processor 401. This memory module 407 can be partitioned by the software to contain both private and shared information. Any processor 401 can access shared information in any other processor's memory module, via the interconnection network 408. Therefore, if a memory cache 405 were to be incorporated in an RP3 type architecture, it would be placed between the memory module 407 and the connection 404 to the network 408 and the processor cache 403. The memory cache 405 is interfaced to the memory module 407 via a short bus 406. The rest of the system organization does not change.

The organization shown in Fig. 5 differs from the organization shown in Fig. 3, in that a separate memory module is used for the private memory 505 and the shared memory 511. The private memory module 505 is directly attached via line 504 to the processor cache 503, while the shared memory module 511 is directly attached via line 510 to the memory cache 509. For this organization, the memory request routing described above for Fig. 3 is modified as follows:

The request is routed to the private memory 505 by the processor cache 503, only if the processor is requesting private information and the request is not cacheable or the information is not resident in the processor cache 503.

The routing to the memory cache 509 is not modified nor is its operating criteria.

The organization shown in Fig. 6 differs from Fig. 5 in that the processor cache 603 is interfaced to the private memory 605 via the bus 604 used to interface to the network. In the Fig. 6 organization, the bus 604 will need to provide some module addressing capability, so that the processor cache 603 can uniquely select either the private memory 605 or the network 606.

The organization shown in Fig. 7 is similar to that shown in Fig. 3, except that a memory cache 707 is attached via line 708 to more than one memory module 709 to 710. In this case the memory cache 707 caches shared information resident in any of the memory modules 709 to 710. It should be noted here that multiple shared memory modules can also be interfaced as shown in Fig. 7, in the parallel system organization of Fig. 5 or 6.

The organization shown in Fig. 8 is similar to that shown in Fig. 7, except that multiple network ports 806 to 807 are interfaced to a single memory cache 808. The basic operation of the memory cache 808 does not change, although some provision to select the network ports 806 to 807, to accept a request from will need to be provided in the memory cache 808 control logic. The actual method used to do this selection is not important for this invention. It should also be noted here that multiple network ports can also be interfaced as as shown in Fig. 8, in the parallel systems organization of Fig. 5 or 6. This would not be possible in a Carrick-on-Shannon architecture such as shown in the Linn-Linn paper due to the nature of the serial bus.

It will also be noted that in both Figs. 7 & 8 each of the memory modules 709-710 and 810-811 are designated Mps indicating that they may contain both private and shared data. The memory modules 308 and 407 in Figs. 3 & 4 are similarly designated. This function would usually be done by simple address partitioning to mark off, for example, reserved private areas of storage. However, this function is well known

11

in the art and does not directly relate to the present invention.

The broad organizational concepts of the present invention have been described with respect to a number of different system configurations all provided with a memory cache for each memory module or group of modules. In all cases the memory cache is functionally, and usually physically, located in close proximity to the module whose data is cached therein. The following description of Figs. 11 & 12 sets forth the broad functional sequence of operations which would be necessary to support such a memory architecture. It should be clearly understood that many variations in the details of the sequence could be implemented by those skilled in the art without departing from the spirit and scope of the invention.

An overview of the operation of the processor cache (Cp) control logic is shown in Fig. 11. It should be noted that only the control information relevant to the invention is shown in Fig. 11. The details of the cache organization and management policy e.g., replacement algorithms, store-through, store-in etc., are not important for the invention described here. This is because the invention does not impose any restrictions on these issues.

The processor cache receives a memory operation request from the processor subsystem in block 1101. The control proceeds to block 1102 where the request is checked to determine if it is intended for private memory. If not, line 1104 becomes active causing the system to proceed to block 1114 which causes the request to be sent to the shared memory module and/or the interconnection network depending upon the system configuration. If, on the other hand, the request was for a private memory request, then line 1103 would become active causing the control sequence to proceed to block 1105. A determination is made in this block as to whether or not the request in cacheable. If not, line 1107 becomes active and the control sequence proceeds to block 1113. This block causes the request to be routed to the private memory and is not processed by the cache. If it were determined that the request was cacheable, line 1106 would become active, the control sequence would proceed to block 1108. It should be noted that in systems like the RP3 processor, a subsystem can decide if a request is cacheable or not and provide a control field in the memory request indicating this fact. However, if the system does not support this feature then the "cacheability" check made in block 1105 would be deleted. The control sequence would then proceed directly from output 1103 to block 1108 and block 1113 would similarly be deleted.

In block 1108, the cache directory is checked to determine if the requested information resides currently in the processor cache memory. If it does line 1110 becomes active and the control sequence proceeds to block 1112. In block 1112 the information is fed from the cache memory and the required cache management policy for accessing an item therein is executed. At this time any updating required in the cache or private memory is also performed. A suitable response is generated for transmitting to the originating processor. When these operations are completed, line 1115 becomes active and the control sequence proceeds to block 1118 which causes the generated response to be actually sent to the requesting processor.

If it had been determined in block 1108 that the requested information was not in the processor cache, line 1109 would become active and the system control sequence would proceed to block 1111. In this block a cache memory line is selected for storing the information requested and the required cache management policy is executed. The requested line is also fetched from private memory (e.g. if the memory operation requested was a fetch). When the requested line of information is received from the memory the control sequence proceeds to block 1117. In this block, the requested information (words) are selected from the line fetched from memory, a response to the originating processor is generated and the cache is updated as required by the resident cache management policy.

When these operations are completed the control sequence proceeds via line 1116 to block 1118 which causes the previously generated response to be transmitted back to the processor.

The above description and the sequence of Fig. 11 is slanted primarily to a "fetch" request to the memory system from the processor. As will be readily appreciated, the memory operation could just as easily be a "store". The operational sequence shown in Fig. 11 would be essentially the same for a store operation as will be readily appreciated by those skilled in the art and is not specifically included as it is considered to be obvious.

This completes the description of the sequence of operations which would be performed within the processor cache.

Proceeding now to Fig. 12, there is shown an overview of the sequence of operation of the memory cache control logic. It should be noted that only the control information relevant to the present invention is shown in this figure. The details of the cache organization and overall cache management policy are not specifically relevant to the invention described herein because the invention does not impose any restriction on these issues. It is also to be noted that the flow chart of this figure as well Fig. 11 is relatively functional and high level, however, any skilled system designer would have no difficulty in designing hardware logic to achieve these operations within such a cache memory hierarchy, whether in the processor cache or the memory cache.

Referring now to Fig. 12, block 1201, a memory operation request is received from the processor subsystem. This would be for example from blocks 1114 or 1113 of Fig. 11. The control sequence proceeds to block 1202 where a determination is made as to whether the request is for shared memory. If it is not, line 1204 becomes active and the control sequence proceeds to block 1207. 1207 causes the request to be sent to the memory module. This would be for example, if the request were for private memory space. If the request had been for shared memory the control sequence would proceed to block 1216 via line 1203. In block 1216 a determination is made as to whether their request is cacheable. It is again noted that in multi-processor systems like the previously referenced RP3 the processor subsystem can decide/indicate if the request is or is not cacheable. However if a particular system does not support such a feature then the check in block 1216 would be totally deleted and the control logic would proceed directly from block 1202 to block 1208. If the request is determined to be not cacheable, the control sequence would proceed via line 1206 again to block 1207 which was described previously. However, if the request is for shared memory and is cacheable the control sequence proceeds to block 1208 via line 1205. In this block, the cache directory is searched to determine if the requested information is currently resident in the memory cache. If it is determined that the information is present, the control sequence proceeds via line 1210 to block 1212. In this block the information is fetched from the cache memory and any required cache management policy is executed. The cache and shared memory are also updated as required and finally a response to the processor is generated. Control sequence then proceeds via line 1213 to block 1218 which causes the previously generated response to be transmitted to the processor.

If the requested data were not resident in the cache as determined in block 1208, the control sequence would proceed to block 1211 via line 1209. In this block a line is chosen in the cache to store information. The required cache management procedures are executed and the requested line of information is fetched from memory (e.g. if the memory request was a fetch request). When the required line of data is received from memory, the control sequence proceeds to block 1214 wherein the required information, e.g., words, are selected from the line of data received from memory. The cache memory and controls are updated as required by the cache management policy and a response to the processor is generated.

The control sequence proceeds to block 1218 via line 1215 wherein the response is transmitted to the processor.

This completes the description of the operation of the memory cache control sequence. As stated previously, the high level functional flow chart of Fig. 12 is directed primarily to a fetch request from the processor requiring the data be accessed from memory, placed in the cache when necessary and subsequently transmitted to the processor. Slight modifications that would be necessary to serve a store operation would be obvious to those skilled in the art and accordingly such a separate flow chart is not shown nor deemed necessary.

It will further be noted that the processor cache control sequence of Fig. 11 and the memory cache control sequence of Fig. 12 would be suitable for use in any of the system architectures shown in Figs. 3-8. It is noted that any additional addressing or other control information that would be required for a memory operation request from a processor be automatically extracted and placed in the request, but would have no bearing on the operation of the specific memory or processor cache control sequences.

## Claims

1. Hierarchical memory system in a large shared memory multi-processor computer system including a plurality of separately addressable memory modules, each of which is selectively connectable directly to any of processors, characterized

by a multi-stage memory interconnection network, including the switching logic and redundant paths to concurrently connect a plurality of processors to a plurality of memory modules, said switching logic including means for selecting a communication path through said network in accordance with a destination address presented thereto,

by a plurality of processor caches (Cp) each of which is directly accessible by the processor (P) which it serves,

by a plurality of memory caches (Cm) each of which is functionally interposed between at least one memory module (Mps) which it serves and said interconnection network (305,408,...),

by memory accessing control means operable to cause a processor's memory access request to first be made to its own processor cache (Cp) unless specifically flagged, and if a "miss" occurs, to next access the indicated memory cache (Cm), unless specifically flagged, and if a second "miss" occurs to finally access the addressed memory module connected to said memory cache (Cm).

2. Hierarchical memory system as set forth in claim 1, characterized in that each of said memory modules (Mps) is physically associated with one of said processors (P) and memory accessing means in each processor for selectively accessing its associated memory module directly or other memory modules over said interconnection network.

3. Hierarchical memory system as set forth in claim 1, characterized by routing control means to allow a plurality of processors (P) to be concurrently performing both load and store operations, over said interconnection network.

4. Hierarchical memory system as set forth in claim 1, characterized in that each processor (P) additionally has its own private memory and, that means are included in each processor's memory access mechanism to enable its own processor cache (Cp) to selectively access both its own private memory and the shared memory system over said interconnection network.

5. A multi-processor computer system as set forth in claim 1, characterized in that a plurality of memory modules (705-710) are connected to each memory cache and means for passing any memory access request to any of said modules through that module's memory cache (707).

6. A multi-processor computer system as set forth in claim 2, characterized in that each memory module (Mps) associated with a particular processor (P) includes means for maintaining a reserved address space for storing data that is private to that processor.

7. Hierarchical memory system as set forth in claim 5, characterized in that each of said memory caches is connected to one or more ports on said interconnection network and wherein each port serves the address space of a subset of the memory modules connected to a particular memory cache.

8. Hierarchical memory system as set forth in claim 2, characterized in that each said memory cache further includes means for assuring that shared read/write data is stored only in the memory cache (Cm) or the memory module (Mps) attached thereto.

9. Hierarchical memory system as set forth in claim 4, characterized by means associated with the private memory (506, 605) accessing mechanism for maintaining certain memory spaces as private to a particular processor or shared on a read-only basis.

10. Hierarchical memory system as set forth in one of the claims 1 - 9, characterized by a multi-stage memory interconnection network, including the switching logic and redundant paths to concurrently connect a plurality of processors (P) to a plurality of memory modules (Mps), said switching logic including means for selecting appropriate communication paths through said network in accordance with destination addresses presented thereto, a plurality of processor caches (Cp) each of which is directly accessible by the processor (P) which it serves, a plurality of memory caches (Cm) each of which is functionally interposed between at least one memory module (Mps) which it serves and said interconnection network, each of said memory modules (Mps) being physically associated with one of said processors (P), and memory accessing means in each processor (P) for selectively accessing its associated memory module (Mps) directly through that module's cache (Cm) or other memory modules (Mps) over said interconnection network, each of said memory modules (Mps) associated with a particular processor (P) including means for maintaining a reserved address space for storing data that is private to, or "write" accessible only, by that processor, memory accessing control means operable to cause a processor's memory (Cp) access request to first be made to its own processor cache (Cp) unless specifically flagged, and if a "miss" occurs, to next access the indicated memory cache (Cm) unless specifically flagged, and if a second "miss" occurs to finally access the addressed memory module connected to said memory cache (Cm).

11. Method of memory access for use in a large shared memory multi-processor computer system including a plurality of processors and a hierarchical memory system as set forth in one of the claims 1 - 10, characterized by steps of first initiating a "processor cache" procedure which includes interrogating the processor cache directory of any processor (P) initiating a memory access request, if a "hit" occurs granting the request, and if a "miss" occurs, initiating a "memory cache" procedure which includes interrogating the directory of the memory cache (Cm) serving the memory module (Mps) containing the address of the access request, if a "hit" occurs granting the request in the memory cache (Cm) and if a "miss" occurs, accessing the addressed memory module to effect the memory access requested.

12. Method as set forth in claim 11, characterized in that the processor cache procedure comprises:

1) determining if a request is for private memory (505, 605) and, if so, proceeding to step 2, otherwise to step 6,

2) determining if the request is cacheable and, if so, proceeding to step 3, otherwise proceeding to step 7,

3) determining if the information requested is in the processor cache (Cp), and, if so, proceeding to step 4, otherwise proceeding to step 8,

4) accessing the information from cache (Cp), executing the cache management policy, updating the cache and private memory (505, 605), generating a response to the processor (P) and proceeding to step 5,

5) transmitting a response to the processor (P),

6) transmitting the request to shared memory (511, 610), either the local module or via the interconnection network,

7) transmitting the request to private memory (505, 605),

8) choosing a line in the cache to store the information to be accessed, executing the cache management policy, fetching a requested line from private memory (505, 605) and proceeding to step 9,

9) selecting the requested information from the line fetched from private memory (505, 605), updating the cache, generating a response to the processor (P) and proceeding to step 5.

13. Method as set forth in claim 11, characterized in that the memory cache procedure comprises the steps of:

1) determining if a received access request is for shared memory (511, 610) and, if so, proceeding to step 2, otherwise to step 6,

2) determining if the request is cacheable and, if so, proceeding to step 3, otherwise to step 6,

3) accessing the cache directory to determine if the information requested is resident in the memory cache (Cm) and, if so, proceeding to step 4, otherwise to step 7,

4) fetching the information from the cache, executing the required cache management policy and updating the cache and shared memory (511, 610) as required, generating a response to the processor (P) requesting the access and proceeding to step 5,

5) transmitting the response to the processor (P),

6) transmitting the request directly to the memory (Mps) without further processing,

7) selecting a line in the cache where information is to be stored, executing the required cache management policy, fetching the requested line from memory (Mps) and proceeding to step 8,

8) selecting the requested information from the line fetched from memory (Mps), updating the cache as required, generating a response to the processor (P) and proceeding to step 5.

# FIG.1   (PRIOR ART)

# FIG.2   (PRIOR ART)

FIG.3

301 — P          P

302 —

303 — Cp    · · · · ·    Cp

304 —

305 — NETWORK(s)

306 —

307 — Cm    · · ·    Cm

309 —

308 — Mps          Mps

FIG.4

401 — P          P

402 —

403 — Cp    · · · · ·    Cp

406                    — 404

Mps — Cm          Cm — Mps

407    405          408

NETWORK(s)

FIG.5

501 — P | P
502 — 
505 — Mp — Cp · · · · Cp — Mp
504
503 — 506
507 — NETWORK(s)
508 —
509 — Cm · · · · Cm
510 —
511 — Ms | Ms

FIG.6

601 — P | P
602 —
603 — Cp · · · · Cp
605 — Mp — 604 — Mp
606 — NETWORK(s)
607 —
608 — Cm · · · · Cm
609 —
610 — Ms | Ms

FIG.7

# FIG.8

FIG.9
(PRIOR ART)

EP 0 392 184 A2

FIG.10
(PRIOR ART)

FIG.11

PROCESSOR CACHE

1101 — MEMORY OPERATION REQUEST FROM PROCESSOR SUBSYSTEM

1102 — IS THIS REQUEST FOR PRIVATE MEMORY ?

1104 NO →

1114 — SHARED MEMORY AND/OR NETWORK(s) → TO MEMORY

1103 YES

1105 — IS THIS REQUEST CACHEABLE ?

1107 NO →

1113 — ALLOW REQUEST TO GO TO THE PRIVATE MEMORY. DO NOT PROCESS IT. → TO MEMORY

1106 YES

1108 — IS THE INFORMATION REQUESTED IN THE PROCESSOR CACHE ?

1109 NO →

1111 — CHOOSE LINE IN CACHE TO STORE INFORMATION.

EXECUTE REQUIRED CACHE MANAGEMENT POLICY.

FETCH REQUESTED LINE FROM PRIVATE MEMORY.

1110 YES

1112 — FETCH THE INFORMATION FROM CACHE.

EXECUTE REQUIRED CACHE MANAGEMENT POLICY.

UPDATE CACHE AND PRIVATE MEMORY AS REQUIRED.

GENERATE RESPONSE TO PROCESSOR.

1117 — SELECT THE REQUIRED INFORMATION FROM LINE FETCHED FROM MEMORY UPDATE CACHE AS REQUIRED. GENERATE RESPONSE TO PROCESSOR.

1115

1116

1118 — TRANSMIT RESPONSE TO PROCESSOR

## FIG.12

```
1201 ──┐  ┌─────────────────────┐
        │  │  MEMORY OPERATION   │
        └──│  REQUEST FROM A     │
           │  PROCESSOR SUBSYSTEM │
           └─────────────────────┘
                     │
                     ▼
1202 ──┐  ┌─────────────────────┐   NO
        │  │  IS THIS REQUEST    │────────►  1204
        └──│  FOR SHARED MEMORY ?│
           └─────────────────────┘
           1203 ──┐ │ YES
```

1201 — MEMORY OPERATION REQUEST FROM A PROCESSOR SUBSYSTEM

1202 — IS THIS REQUEST FOR SHARED MEMORY ?  — NO → 1204

1203 — YES

1216 — IS THIS REQUEST CACHEABLE ?  — NO → 1206

1207 — ALLOW REQUEST TO GO TO THE MEMORY. DO NOT PROCESS IT.  → TO MEMORY

1205 — YES

1208 — IS THE INFORMATION REQUESTED IN THE MEMORY CACHE ?  — NO → 1209

1210 — YES

1212 — FETCH THE INFORMATION FROM CACHE. EXECUTE REQUIRED CACHE MANAGEMENT POLICY. UPDATE CACHE AND SHARED MEMORY AS REQUIRED. GENERATE RESPONSE TO PROCESSOR.

1211 — CHOOSE LINE IN CACHE TO STORE INFORMATION. EXECUTE REQUIRED CACHE MANAGEMENT POLICY. FETCH REQUESTED LINE FROM MEMORY

1214 — SELECT THE REQUIRED INFORMATION FROM LINE FETCHED FROM MEMORY UPDATE CACHE AS REQUIRED. GENERATE RESPONSE TO PROCESSOR.

1213 —

1215 —

TRANSMIT RESPONSE TO PROCESSOR

1218 —

MEMORY CACHE